# EUROPÄISCHE PATENTSCHRIFT

(11) **EP 2 033 735 B1**
(45) Veröffentlichungstag und Bekanntmachung des Hinweises auf die Patenterteilung: **02.12.2009**
(21) Anmeldenummer: 07116037.8
(22) Anmeldetag: 10.09.2007
(51) Int. Cl.: B23Q 7/00, B23Q 7/04, B23Q 7/02

(54) **Kompakter Werkstückwechsler**
Compact workpiece changer
Dispositif de changement d'outil compact

(43) Veröffentlichungstag der Anmeldung: 11.03.2009
(73) Patentinhaber: Indunorm Bewegungstechnik GmbH, 47249 Duisburg (DE)
(72) Erfinder: Matthes, Klaus-Dieter, 40822 Mettmann (DE); Ridder, Folko, 40472 Düsseldorf (DE)
(74) Vertreter: Schmidt, Frank-Michael

(56) Entgegenhaltungen:
- EP-A- 1 616 661
- DE-U1- 29 825 149
- US-A- 4 480 738

## Beschreibung

Die Erfindung bezieht sich auf einen kompakten Werkstückwechsler für eine Bearbeitungsmaschine, wobei der Werkstückwechsler mehrere Auflageflächen zum Aufnehmen jeweils eines Werkstückträgers und ein Handhabungsgerät zum Transportieren der Werkstückträger von einer der Auflageflächen zu einem vorgegebenen Übergabeort auf einer horizontalen Auflage der Bearbeitungsmaschine aufweist.

Ein Werkstückwechsler für eine Bearbeitungsmaschine mit einem rotierenden Trägerkarussell, das eine Mehrzahl von Auflageflächen aufweist, und einem Handhabungsgerät zum Transportieren von Werkstückträgern von einer der Auflageflächen zu einem vorgegebenen Übergabeort auf einer horizontalen Auflage der Bearbeitungsmaschine und zurück ist beispielsweise aus dem Dokument EP 1 616 661 A1 bekannt. Bei diesem Werkstückwechsler ist eine Greifereinrichtung als Doppelgreifer ausgebildet, die zwei in entgegengesetzte Richtungen weisende U-förmige Greifer umfasst. Die Greifer weisen jeweils zwei Greifarme auf, die zum Untergreifen und Anheben bzw. Absenken des Werkstückträgers dienen. Beim Anheben bzw. Absenken greifen die Greifarme bis hinter den Schwerpunkt des Werkstückträgers, so dass dieser sicher auf dem Greifer aufliegt.

Ferner wird ein Werkstückwechsler von der Anmelderin unter der Bezeichnung "INDUMATIK^{®} LIGHT" angeboten. Dieser Werkstückwechsler weist innerhalb eines geschlossenen Gehäuses mehrere übereinander angeordnete Regalböden mit jeweils einer Reihe von Ablageflächen zur Aufnahme von Werkstückträgern auf, wobei zwei Regale mit mehreren übereinander angeordneten Regalböden an gegenüberliegenden Seiten des Gehäuses angeordnet sind. In einer dazwischen gebildeten Gasse bewegt sich ein Handhabungsgerät mit einem Greifer, welcher die Werkstückträger von den Regalböden entnehmen und zu einer vorgegebenen Auflagefläche in der Bearbeitungsmaschine transportieren kann. Auf diesem Weg bewegt sich der Greifer durch eine neben der Bearbeitungsmaschine angeordnete Öffnung des Gehäuses hindurch. Das Bediengerät umfasst mehrere Linearführungen und zugehörige Antriebe, so dass es den Greifer horizontal und vertikal in der Gasse und zusätzlich in die Regalböden hinein und wieder heraus bewegen kann. Der Antrieb der Greiferbewegung umfasst sowohl elektromotorische Servoantriebe für die horizontale und vertikale Bewegung in der Gasse als auch einen pneumatischen Antrieb des Greifers zum Ergreifen des Werkstückträgers. Bei dem Greifer handelt es sich somit um einen aktiven Greifer, d. h. einen Greifer der zum Ergreifen des Werkstückträgers eine Greifbewegung ausführt. Der bekannte Werkstückwechsler kann eine relativ große Anzahl an Werkstückträgern lagern, wobei eine geringe Stellfläche erforderlich ist.

Aufgabe der Erfindung ist es, einen preiswerten kompakten Werkstückwechsler zu schaffen, der bei solchen Anwendungen einsetzbar ist, bei denen eine geringere Anzahl von Werkstückträgern automatisch zugeführt werden soll.

Diese Aufgabe wird erfindungsgemäß durch einen kompakten Werkstückwechsler mit den Merkmalen des Anspruchs 1 gelöst. Der erfindungsgemäße kompakte Werkstückwechsler für eine Bearbeitungsmaschine weist ein rotierendes Trägerkarussell mit einer Mehrzahl von horizontalen Auflageflächen auf, die jeweils einen Werkstückträger aufnehmen können. Ferner ist ein Handhabungsgerät zum Transportieren der Werkstückträger von einer der Auflageflächen zu einem vorgegebenen Übergabeort auf einer horizontalen Auflage der Bearbeitungsmaschine und zurück vorgesehen. Das Handhabungsgerät weist einen passiven Greifer auf. An jedem Werkstückträger ist seitlich eine an den passiven Greifer angepasste Greiferaufnahme derart angeordnet, dass sich die Greiferaufnahme horizontal versetzt neben einer durch den Schwerpunkt des Werkstückträgers hindurchgehenden Senkrechten befindet. Die Greiferaufnahme weist wenigstens eine Ausnehmung auf, in die wenigstens ein Vorsprung des Greifers formschlüssig eingreifen kann. Die wenigstens eine Ausnehmung der Greiferaufnahme und der wenigstens eine Vorsprung des Greifers sind derart ausgebildet, dass einerseits beim Eingreifen des Greifers ein Kippen des Werkstückträgers verhindert wird und andererseits gewährleistet wird, dass der Greifer beim Ablegen des Werkstückträgers auf der horizontalen Auflage ohne störende Einwirkung auf den Werkstückträger ungehindert aus der Greiferaufnahme herausgezogen werden kann. Die Greiferaufnahme weist wenigstens eine nach unten offene Ausnehmung auf, in die wenigstens ein nach oben gerichteter Vorsprung des Greifers eingreifen kann, indem der wenigstens eine Vorsprung horizontal unter die wenigstens eine Ausnehmung bewegt und dann vertikal nach oben in die wenigstens eine Ausnehmung eingefahren wird. Dabei sind die wenigstens eine Ausnehmung und der wenigstens eine Vorsprung derart ausgebildet, dass einerseits beim Einfahren und Anheben des Greifers ein Kippen des Werkstückträgers verhindert wird und andererseits gewährleistet ist, dass der Greifer beim Ablegen des Werkstückträgers auf einer horizontalen Ablage nach unten ungehindert aus der Greiferaufnahme herausgezogen werden kann. Bei dieser Ausführungsform kann das passive Greifen relativ sicher ausgeführt werden, weil zum Eingreifen und Ablegen eine vertikale Greiferbewegung ausgeführt wird, während zum Transportieren von einer Auflagefläche zu einer Auflage der Bearbeitungsmaschine und zurück eine horizontale Bewegung ausgeführt wird. Greifbewegung und Transportbewegung sind somit entkoppelt. Die Greiferaufnahme ist in einer ersten Richtung versetzt neben der durch den Schwerpunkt des Werkstückträgers hindurchgehenden Senkrechten angeordnet und sind die Greiferaufnahme und der Greifer derart ausgebildet, dass beim Einfahren des wenigstens einen Vorsprungs des Greifers in die wenigstens eine Ausnehmung der Greiferaufnahme wenigstens eine erste Anlagefläche des Greifers an wenigstens einer ersten Anlagefläche der Greiferaufnahme entlanggleitet, bis wenigstens eine zweite Anlagefläche des Greifers an wenigstens einer zweiten Anlagefläche der Greiferaufnahme zur Anlage kommt. Dabei sind die wenigstens eine erste und die wenigstens eine zweite Anlagefläche der Greiferaufnahme quer zu der ersten Richtung orientiert, in der ersten Richtung beabstandet und in der vertikalen Richtung versetzt angeordnet. Zwischen der wenigstens einen ersten und der wenigstens einen zweiten Anlagefläche der Greiferaufnahme ist ein sich nach unten öffnender spitzer Winkel zwischen 5° und 45°, vorzugsweise zwischen 10° und 20°, gebildet. Sofern man die durch den Schwerpunkt des Werkstückträgers hindurchgehende Senkrechte als axiale Richtung definiert, ist die erste Richtung eine radiale Richtung. Die Orientierung der ersten und der zweiten Anlagefläche der Greiferaufnahme quer zu der ersten Richtung bedeutet somit, dass sowohl die erste als auch die zweite Anlagefläche von radialen Strahlen durchstoßen werden, wobei sie nicht senkrecht zu den radialen Strahlen orientiert zu sein brauchen. Auch sind die erste und die zweite Anlagefläche vertikal versetzt, so dass nicht die dieselben radialen Strahlen die Anlageflächen durchstoßen. Die erste und die zweite Anlagefläche der Greiferaufnahme sind beide senkrecht oder in einem spitzen Winkel zur Senkrechten derart orientiert, dass sie nach oben aufeinander zu laufen, wobei sich ein nach unten öffnender spitzer Winkel zwischen 5° und 45° ergibt. Die erste Anlagefläche, auf der der Greifer entlanggleitet, ist in einem Winkel zur Senkrechten angeordnet, während die zweite Anlagefläche senkrecht oder ebenfalls in einem Winkel orientiert sein kann.

Grundgedanke der Erfindung bei der Schaffung eines preiswerten kompakten Werkstückwechslers ist es, auf mehrere verschiedenartige (elektromotorische und pneumatische) Antriebe zu verzichten und das Handhabungsgerät und dessen Steuerung zu vereinfachen. Anstelle des o.g. bekannten pneumatisch betätigten aktiven Greifers wird ein passiver Greifer eingesetzt, der ohne Greifbewegung in eine entsprechende Greiferaufnahme formschlüssig eingreifen kann. Die Antriebe des Trägerkarussells und des Bediengeräts brauchen nur noch von einer Art, d. h. beispielsweise elektromotorisch oder pneumatisch, zu sein; ein Antrieb des Greifers (für die Greifbewegung) entfällt. Zur weiteren Vereinfachung des Werkstückwechslers trägt bei, dass anstelle einer Vielzahl von Regalböden lediglich ein rotierendes Trägerkarussell mit einer Mehrzahl von horizontalen Auflageflächen eingesetzt wird. Dies vereinfacht die Steuerung des Handhabungsgeräts, da dieses nur noch an einer einzigen Stelle auf die auf dem Trägerkarussell gelagerten Werkstückträger zuzugreifen braucht. Das rotierende Trägerkarussell sorgt dafür, dass die Auflagefläche mit dem jeweils gewünschten Werkstückträger zu einem vorgegebenen Ort, an dem das Handhabungsgerät darauf zugreifen kann, transportiert wird. Eine einhergehende Verringerung der Anzahl möglicher Lagerflächen wird in Kauf genommen. Das rotierende Trägerkarussell kann beispielsweise ein umlaufendes Band sein; vorzugsweise ist es jedoch ein elektromotorisch angetriebener Drehteller mit mehreren am Umfang verteilt angeordneten Auflageflächen.

Bei einer bevorzugten Ausführungsform sind sowohl das Trägerkarussell als auch das Handhabungsgerät ausschließlich elektromotorisch angetrieben. Dies ermöglicht, den gesamten Werkstückwechsler einschließlich der Ansteuerelektronik nur mit einem Medium (d.h. elektrischer Energie) zu versorgen; eine zusätzliche pneumatische Versorgung entfällt.

Bei einer bevorzugten Ausführungsform sind die erste Anlagefläche des Greifers und die erste Anlagefläche der Greiferaufnahme eben ausgebildet, so dass der Greifer beim Eingreifen flächig auf der Greiferaufnahme entlanggleitet.

Eine bevorzugte Ausführungsform ist **dadurch gekennzeichnet, dass** die wenigstens eine zweite Anlagefläche der Greiferaufnahme eine näherungsweise senkrechte Innenfläche der wenigstens einen Ausnehmung ist. Die Oberfläche der Innenfläche ist dem Werkstückträger zugewandt. Die wenigstens eine erste Anlagefläche der Greiferaufnahme ist in der horizontalen ersten Richtung zwischen der wenigstens einen zweiten Anlagefläche und der durch den Schwerpunkt führenden Senkrechten und in vertikaler Richtung unterhalb der wenigstens einen zweiten Anlagefläche angeordnet. Die Oberfläche der ersten Anlagefläche ist der zweiten Anlagefläche zugewandt. Die beiden Anlageflächen der Greiferaufnahme bilden somit einen nach unten offenen spitzen Winkel, wobei die obere Anlagefläche weiter von der Senkrechten durch den Schwerpunkt des Werkstückträgers entfernt ist. Dabei sind der vertikale Versatz der beiden Anlageflächen der Greiferaufnahme und der horizontale Abstand voneinander sowie der horizontale Abstand von der durch den Schwerpunkt führenden Senkrechten so gewählt, dass einerseits ein Nach-Unten-Kippen des Werkstückträgers aufgrund eines Verrutschens der zweiten Anlagefläche vermieden wird und andererseits die auf die Anlageflächen einwirkende Flächenlast verringert wird.

Bei einer Ausführungsform kann die nach unten offene Ausnehmung eine sich quer zu der ersten Richtung erstreckende Nut sein, wobei die wenigstens eine zweite Anlagefläche von zumindest einer Teiloberfläche der dem Werkstückträger zugewandten Innenfläche der Nut gebildet wird. Wenn in diesem Fall die zweite Anlagefläche der Greiferaufnahme und die zweite Anlagefläche des Greifers eben sind, so liegen diese flächig aneinander an. Es ist jedoch bevorzugt, dass entweder die zweite Anlagefläche der Greiferaufnahme oder die zweite Anlagefläche des Greifers nicht eben ausgebildet sind, so dass diese nicht flächig sondern nur in einem oder mehreren schmalen Streifen aneinander aufliegen. Dies verringert die Gefahr des Festklemmens. Bei dieser Ausführungsform kann es ferner vorgesehen sein, dass seitliche Begrenzungen der Nut ausgebildet sind, um ein Herausrutschen des ergriffenen Werkstückträgers quer zur ersten Richtung, d. h. entlang der Nut, zu vermeiden.

Bei einer bevorzugten Ausführungsform sind die Ausnehmungen der Greiferaufnahme Bohrungen, in die jeweils ein Zapfen des Greifers eingreifen kann, wobei jeweils eine zweite Anlagefläche von einer Teiloberfläche der Innenfläche einer Bohrung gebildet wird. Die Bohrungen können beispielsweise einen kreisförmigen Querschnitt haben, wobei die Zapfen ebenfalls einen kreisförmigen Querschnitt aufweisen, der geringer als der der Bohrungen ist. Dann werden die Anlageflächen innerhalb der Bohrungen jeweils von einem schmalen senkrechten Streifen gebildet, in dem der Zapfen an der Innenwandung der Bohrung anliegt. Bei einer bevorzugten Ausführungsform sind zwei Bohrungen und zwei Zapfen vorgesehen, die etwa gleich von der ersten Anlagefläche beabstandet sind. Vorzugsweise sind hierbei die erste Anlagefläche der Greiferaufnahme und die erste Anlagefläche des Greifers eben ausgebildet und liegen flächig aneinander an. Bevorzugt ist es hierbei ferner, dass die beiden Bohrungen und die beiden Zapfen senkrecht ausgeführt sind, wohingegen die ebene erste Anlagefläche in einem spitzen Winkel zur Senkrechten geneigt ist, so dass beim Eingreifen der Greifer mit seiner ersten Anlagefläche auf der ersten Anlagefläche der Greiferaufnahme entlanggleitet, bis die in die Bohrungen eingreifenden Zapfen an ihrer von der ersten Anlagefläche abgewandten Seite auf den Innenwandungen der Bohrungen anliegen, so dass dann keine Relativbewegung zwischen Greifer und Greiferaufnahme, weder in vertikaler noch in horizontaler Richtung möglich ist. Lediglich nach dem Ablegen des Werkstückträgers können dann die Zapfen nach unten aus den Bohrungen herausgezogen werden. Dies wiederum ist bei dem oben genannten Neigungswinkel ohne Festklemmen möglich.

Bei einer vorteilhaften Weiterbildung sind die unteren Ränder der Bohrungen konisch erweitert und/oder die oberen Enden der Zapfen konisch verjüngt, um das Einfahren zu erleichtern. Dadurch findet eine Selbstzentrierung statt, während der Greifer auf der ersten Anlagefläche entlanggleitet.

Bei einer vorteilhaften Weiterbildung des kompakten Werkstückwechslers umfasst das Handhabungsgerät einen Linearachsroboter mit einer Linearführung, wobei der Greifer an einer auf der Linearführung horizontal geführten Vorrichtung zum vertikalen Bewegen des passiven Greifers befestigt ist. Die horizontale Linearführung führt den Greifer zwischen der Auflagefläche des Trägerkarussells und der horizontalen Auflage der Bearbeitungsmaschine hin und her. Die Vorrichtung zum vertikalen Bewegen führt den Greifer zum Eingreifen oder Freigeben des Werkstückträgers. Diese Bewegungen sind entkoppelt, wodurch die Steuerung des Handhabungsgeräts vereinfacht und somit die Kosten verringert werden. Vorzugsweise ist hier wiederum das Trägerkarussell ein Drehteller mit mehreren am Umfang verteilt angeordneten Auflageflächen.

Der Werkstückträger umfasst beispielsweise einen Zentrierspanner zum Halten des Werkstücks und eine Trägerplatte mit Greiferaufnahme. Bei einer alternativen Ausführungsform kann der Werkstückträger einstückig aus einem Zentrierspanner mit Greiferaufnahme ausgebildet sein.

Vorteilhafte und/oder bevorzugte Weiterbildungen der Erfindung sind in den Unteransprüchen gekennzeichnet.

Im Folgenden wird die Erfindung anhand eines in den Zeichnungen dargestellten bevorzugten Ausführungsbeispiels näher erläutert. In der Zeichnungen zeigen:
Figur 1 eine schematische Perspektivansicht der funktionellen Hauptbestandteile einer Ausführungsform des erfindungsgemäßen kompakten Werkstückwechslers;
Figur 2 eine Detailansicht des in Figur 1 gezeigten Werkstückwechslers, die einen Werkstückträger mit Werkstück und Greiferaufnahme, einen Greifer und eine Vorrichtung zum vertikalen Bewegen des Greifers umfasst;
Figur 3 eine schematische Schnittteilansicht der Anordnung gemäß Figur 2, die einen Teil des Werkstückträgers mit Greiferaufnahme und einen Teil des Greifers darstellt;
Figur 4 eine Unteransicht der Trägerplatte des Werkstückträgers; und
Figur 5 eine schematische Ansicht der Lage des Zapfens des Greifers in der Aufnahmebohrung der Greiferaufnahme.

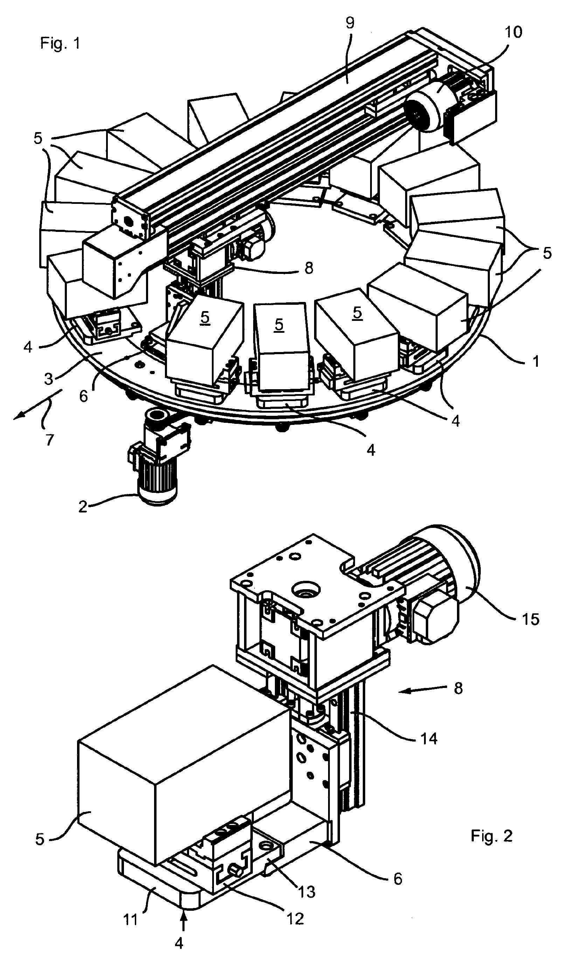

Figur 1 zeigt eine Perspektivansicht der für die Funktion des erfindungsgemäßen Werkstückwechslers wesentlichen Bestandteile. Der Werkstückwechsler weist ein Trägerkarussell 1 in Form einer sich drehenden Scheibe auf, das von einem Elektromotor 2 (über einen nicht näher dargestellten Riemenantrieb) angetrieben wird. Mit Hilfe einer geeigneten Ansteuerung des Motors 2 sorgt eine Steuereinrichtung dafür, dass das Trägerkarussell 1 sich um vorgegebene Winkel dreht und in bestimmten Positionen anhält. Auf dem Trägerkarussell befinden sich mehrere horizontale Auflageflächen 3, auf denen jeweils ein Werkstückträger 4 aufliegen kann. Bei dem in Figur 1 dargestellten Beispiel sind sämtliche Auflageflächen mit Ausnahme einer einzigen Auflagefläche 3 mit Werkstückträgern 4 belegt. Auf jedem Werkstückträger 4 ist ein Werkstück 5 eingespannt.

Befindet sich eine Auflagefläche 3 mit einem Werkstückträger 4 an der Position, an der sich in Figur 1 die leere Auflagefläche 3 befindet, so kann ein Greifer 6 den dort befindlichen Werkstückträger 4 ergreifen, von der Auflagefläche 3 abheben und zu einem vorgegebenen Übergabeort auf einer horizontalen Auflage einer Bearbeitungsmaschine transportieren. Der in Figur 1 nicht dargestellte Übergabeort befindet sich in der mit dem Pfeil 7 angezeigten Richtung außerhalb des Trägerkarussells 1. Umgekehrt kann der Greifer 6 einen auf einer vorgegebenen Auflage der Bearbeitungsmaschine befindlichen Werkstückträger 4 aufnehmen und auf eine leere Auflagefläche 3 des Trägerkarussells ablegen.

Der Greifer 6 kann sich sowohl vertikal als auch in einer vorgegebenen Richtung horizontal bewegen. Zum vertikalen Bewegen des Greifers ist dieser mit einer Vorrichtung 8 verbunden, die eine Linearführung und einen Antriebsmotor umfasst. Die Vorrichtung 8 zum vertikalen Bewegen des Greifers 6 wiederum ist an einer Linearführung 9 befestigt, welche sich in einer radialen Richtung des Trägerkarussells 1 erstreckt und über dem Trägerkarussell angeordnet ist. Die Linearführung 9 ist mit einem Motor 10 gekoppelt, mit dessen Hilfe die den Greifer 6 tragende Vorrichtung 8 in radialer Richtung bewegt werden kann. Die Linearführung 9 kann dabei in radialer Richtung über den äußeren Rand des Trägerkarussells 1 hinaus ausgefahren werden, so dass der Greifer 6 mit angehobenem Werkstückträger 4 in Richtung des Pfeils 7 zu der Auflage der Bearbeitungsmaschine und zurück bewegt werden kann.

Der Werkstückträger 4 mit eingespanntem Werkstück 5, der Greifer 6 und die Vorrichtung 8 zum vertikalen Bewegen des Greifers 6 sind in Figur 2 detaillierter dargestellt. Der Werkstückträger 4 umfasst bei der in Figur 2 dargestellten Ausführungsform eine Trägerplatte 11 und einen auf der Trägerplatte 11 montierten Zentrierspanner 12. In den Zentrierspanner 12 ist das Werkstück 5 fest eingespannt. Zentrierspanner der hier verwendeten Art sind allgemein bekannt und werden deshalb hier nicht näher beschrieben. An der Trägerplatte 11 ist eine Greiferaufnahme 13 angeformt. Die Greiferaufnahme 13 ist an die Form des Greifers 6 angepasst. Insbesondere weist die Greiferaufnahme 13 Anlageflächen und Ausnehmungen auf, wobei Anlageflächen bzw. Vorsprünge des Greifers 6 formschlüssig sich an die Anlageflächen der Greiferaufnahme anlegen bzw. in die Ausnehmungen einfahren. Dies wird anhand der nachfolgenden Figuren näher beschrieben.

Der Greifer 6 ist mit Hilfe eines Schlittens an einer Linearführung 14 der Vorrichtung 8 befestigt. Die Vorrichtung 8 umfasst einen Antriebsmotor 15, mit dessen Hilfe der Schlitten auf der Linearführung 14 bewegt werden kann, um den Greifer 6 vertikal anzuheben oder abzusenken.

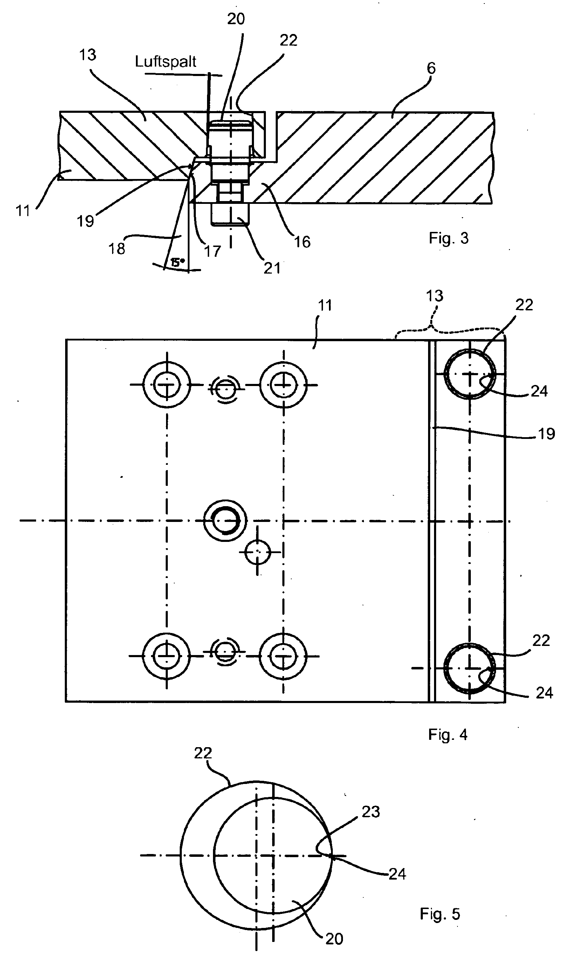

Figur 3 zeigt eine schematische Schnitt-Teilansicht der in Figur 2 gezeigten Anordnung, nämlich einen Teil der Trägerplatte 11 des Werkstückträgers 4 mit der angeformten Greiferaufnahme 13 sowie einen Teil des Greifers 6. Der Greifer 6 umfasst eine Platte 16 mit einer an der vorderen, oberen Kante der Platte 16 ausgebildeten Gleitfläche 17, welche in einem spitzen Winkel 18 (hier 15°) zur Senkrechten geneigt ist. Diese Fläche 17 bildet eine erste Anlagefläche für eine entsprechende Anlagefläche 19 der Greiferaufnahme 13 der Trägerplatte 11. In dem Plattenbereich 16 des Greifers 6 sind darüber hinaus (vorzugsweise 2) Zapfen derart vertikal montiert, dass diese nach oben über die Platte 16 hinausragen. Figur 3 zeigt einen Zapfen 20, der mittels einer Schraubverbindung 21 in einer Bohrung des Plattenbereichs 16 des Greifers 6 befestigt ist.

Die Greiferaufnahme 13 der Trägerplatte 11 weist einerseits die bereits genannte Anlagefläche 19 an einer unteren, dem Greifer 6 zugewandten Kante und andererseits Bohrungen 22 auf, in die die Zapfen 20 des Greifers 6 eingreifen können. Der Durchmesser der Bohrungen 22 ist geringfügig größer als der Außendurchmesser der Zapfen 20. Der Abstand der Bohrungen 22 von der Anlagefläche 19 der Greiferaufnahme 13 ist so gewählt, dass dann, wenn der Greifer 6 mit seinen Zapfen 20 zunächst unter die Bohrungen 22 und dann nach oben in die Bohrungen 22 eingefahren wird und dabei die erste Anlagefläche 17 des Greifers 6 auf der ersten Anlagefläche 19 der Greiferaufnahme 13 nach oben entlanggleitet, die dem Greifer zugewandte Außenfläche des Zapfens 20 an der Innenwandung der Bohrung 22 zur Anlage kommt, bevor die Oberseite des Plattenbereichs 16 an der Unterseite des die Bohrungen 22 enthaltenden Abschnitts der Greiferaufnahme 13 zur Anlage kommt. Figur 3 zeigt diesen Endzustand beim vertikalen Einfahren des Greifers 6 in die Greiferaufnahme 13. Aufgrund des Umstands, dass die Bohrung 22 einen gegenüber dem Zapfen 20 vergrößerten Durchmesser hat und der Zapfen 20 an der dem Greifer zugewandten Fläche in der Bohrung 22 zur Anlage kommt, ergibt sich der in Figur 3 gezeigte Luftspalt zwischen Zapfen 20 und Bohrungsinnenwandung. Diese Lage des Zapfens 20 innerhalb der Bohrung 22 ist in Figur 5 übertrieben dargestellt. Der Zapfen 20 liegt mit einer schmalen senkrechten Anlagefläche 23 an einem senkrechten schmalen Abschnitt 24 der Innenwandung der Bohrung 22 an.

Beim weiteren Anheben des Greifers 6 wird die Trägerplatte 11 nach oben angehoben, ohne dabei zu verkippen oder sich in horizontaler Richtung zu verschieben. Dies ermöglicht ein sicheres Greifen der Trägerplatte 11 durch den passiven Greifer 6. Es ist hierbei nicht erforderlich, dass irgendwelche Elemente des Greifers 6 bewegt werden, um eine Greifposition zu erreichen oder zu arretieren.

Figur 4 zeigt eine Unteransicht der Trägerplatte 11 mit dem mit einer gestrichelten Klammer angedeuteten Bereich der Greiferaufnahme 13. Die Greiferaufnahme 13 umfasst die erste schräge Anlagefläche 19 sowie die beiden Bohrungen 22 mit den zweiten Anlageflächen 24 für die Anlage der Zapfen 20 des Greifers 6.

Um ein Einfahren des Greifers 6 in die Greiferaufnahme 13 zu erleichtern, sind eine Reihe konstruktiver Maßnahmen vorgesehen. Beispielsweise sind die oberen Enden der Zapfen 20 konisch verjüngt (vgl. Figur 3). Außerdem sind die unteren Ränder der Bohrungen 22 konisch erweitert (vgl. Figuren 3 und 4). Zum Vermeiden eines Kippens und für eine sichere Halterung sind die beiden Bohrungen 22 nahe der beiden äußeren Ränder der Greiferaufnahme 13 eingebracht. Für die Dimensionierung der Greifer-Greiferaufnahme-Kombination sind weitere konstruktive Randbedingungen zu beachten. Eine betrifft den horizontalen Abstand zwischen den Bohrungen 22 und der Anlagefläche 19 der Greiferaufnahme, welche dem Abstand zwischen den Zapfen 20 und der Anlagefläche 17 des Greifers 6 entspricht. Wird dieser Abstand zu gering gewählt, so ergeben sich relativ große Flächenpressungen und Belastungen der Anlageflächen. Wird der Abstand dagegen zu groß gewählt, so kann die Trägerplatte 11 an dem unteren Rand der Anlagefläche 19 abkippen, wobei sich die Zapfen 20 nach unten aus den Bohrungen 22 herausbewegen. Dann ist kein Greifen mehr möglich. Ähnliches gilt für den vertikalen Versatz zwischen der Paarung der Anlageflächen 17 und 19 und der Paarung der Anlageflächen 23 und 24. Die letztgenannten Anlageflächen zwischen den Zapfen 20 und den Innenwandungen der Bohrungen 22 befinden sich oberhalb der Anlageflächen 17 und 19. Auch dieser vertikale Versatz darf nicht zu gering gewählt werden, um ein Herauskippen zu vermeiden.

Andererseits wird durch weitere konstruktive Maßnahmen vermieden, dass der in die Greiferaufnahme 13 eingreifende Greifer 6 sich darin verklemmt. Beispielsweise darf der Winkel 18 nicht zu gering gewählt werden, um eine Selbsthemmung des zwischen den Anlageflächen 17 und 19 und den Anlageflächen 23 und 24 gebildeten Keils zu vermeiden. Der Winkel 18 darf andererseits nicht zu groß werden, um das oben beschriebene Abkippen der Trennplatten 11 aus dem Greifer 6 zu vermeiden. Gegen ein Verklemmen des Greifers 6 in der Greiferaufnahme 13 wirkt auch die Verwendung der Zapfen 20 mit gegenüber der Bohrung 22 verringerten Außendurchmessern. Dadurch kommen im eingegriffenen Zustand die Zapfen nur in einer schmalen senkrechten Fläche 23 zur Anlage. Bei alternativen Ausführungsformen wäre es auch denkbar, anstelle der beiden Zapfen 20 und der beiden Bohrungen 22 in der Greiferaufnahme eine sich in die Tiefe der Figur erstreckende Nut vorzusehen, in die ein die Zapfen 20 ersetzender, an die Form der Nut angepasster Steg des Greifers 6 eingreift. Die an der Innenwandung der Nut anliegende Außenwandung des Stegs braucht (im Unterschied zu den Anlageflächen 17 und 19) nicht eben zu sein, sondern weist vorzugsweise vorspringende, senkrecht verlaufende Sicken auf, so dass der Steg nicht flächig an der Innenwandung der Nut anliegt. Damit wird etwa derselbe Effekt erzielt, der durch das streifenförmige Anliegen des Zapfens 20 in der Bohrung 22 erzielt wird. Allerdings ist die in den Figuren 3 bis 5 dargestellte Verwendung von Zapfen und Bohrungen herstellungstechnisch einfacher.

Nachfolgend sei beispielhaft das Verfahren zum Ein- und Auslagern der die Werkstücke 5 transportierenden Werkstückträger 4 beschrieben. Soll ein bestimmter Werkstückträger 4 mit einem zu bearbeitenden Werkstück 5 der Bearbeitungsmaschine zugeführt werden, so wird zunächst das Trägerkarussell 1 solange bewegt, bis sich der gewünschte Werkstückträger 4 unterhalb der Linearführung 9 in der Position befindet, an der in Figur 1 eine frei Auflagefläche 3 gezeigt ist. Der Linearantrieb mit der daran befestigten Vorrichtung 8 zum vertikalen Bewegen des Greifers 6 ist dabei in den Innenraum des Trägerkarussells 1 zurückgefahren. Nun wird der Greifer 6, der zu diesem Zeitpunkt vertikal nach unten gefahren ist, horizontal und radial nach außen soweit bewegt, bis sich die Zapfen 20 unterhalb der Bohrungen 22 befinden. Dann wird der Greifer 6 nach oben gefahren, wobei die Zapfen 20 in die Bohrungen 22 eingreifen, dann die Anlagefläche 17 an der Anlagefläche 19 nach oben entlang gleitet, wobei die Trägerplatte 11 geringfügig vertikal gegenüber dem Greifer 6 solange verschoben wird, bis die Anlagefläche 23 der Zapfen 20 an der Innenwandungsfläche 24 der Bohrungen 22 anliegt. Wenn dann der Greifer 6 weiter vertikal nach oben bewegt wird, so hebt er die Trägerplatte 11 mit dem darauf montierten Zentrierspanner 12 und dem eingespannten Werkstück 5 nach oben. Anschließend fährt der Greifer 6 horizontal und radial nach außen in Richtung des Pfeils 7 zu einem Ort oberhalb einer Auflage der Bearbeitungsmaschine. Diese Auflage ist beispielsweise ein Maschinentisch mit Nullpunktspannsystem. Dort bewegt sich der Greifer wieder nach unten, wobei die Trägerplatte 11 derart auf dem Maschinentisch abgelegt wird, dass die Greiferaufnahme 13 über die seitliche Begrenzung des Maschinentischs hinausragt, so dass der Greifer 6 nach unten bewegt werden kann und sich die Zapfen 20 vollständig aus den Bohrungen 22 herausbewegen können. Dann kann der Greifer 6 horizontal zurück zu dem Trägerkarussell 1 bewegt werden.

Nachdem das Werkstück 5 durch die Bearbeitungsmaschine bearbeitet worden ist, wird der leere Greifer 6 an den Maschinentisch herangefahren, wobei er dort wiederum derart positioniert wird, dass sich die Zapfen 20 unter den Bohrungen 22 befinden. Dann wird der Greifer vertikal nach oben bewegt und die Trägerplatte von dem Maschinentisch abgehoben und anschließend zurück über die Auflagefläche 3 (vgl. Figur 1) des Trägerkarussells 1 bewegt, wo der Greifer 6 erneut abgesenkt wird.

Anschließend dreht sich das Trägerkarussell um einen vorgegebenen Winkel weiter, bis sich der benachbarte Werkstückträger 4 an der Greiferposition befindet. Dann wiederholen sich die oben beschriebenen Schritte des Ergreifens der Trägerplatte, des Transports zu der Bearbeitungsmaschine, des Bearbeitens und des Rücktransports zu dem Trägerkarussell 1.

Sämtliche vollautomatisch steuerbaren Schritte können allein mit Hilfe elektromotorischer Antriebe, nämlich der Antriebe 2, 10 und 15, ausgeführt werden. Die Vermeidung der herkömmlichen zusätzlichen pneumatischen Antriebe zum Ergreifen der Werkstückträger vereinfacht die konstruktive Gestaltung des Werkstückwechslers. Darüber hinaus gestattet die Anordnung der Werkstückträger auf einer rotierenden Trägerscheibe oder einem Trägerkarussell 1 eine relativ einfache Steuerung der Gesamtabläufe, was ebenfalls zu einem preiswerteren Werkstückwechsler beiträgt.

## Patentansprüche

1. Kompakter Werkstückwechsler für eine Bearbeitungsmaschine mit:
einem rotierenden Trägerkarussell (1) mit einer Mehrzahl von horizontalen Auflageflächen (3), die jeweils einen Werkstückträger (4) aufnehmen können,
einem Handhabungsgerät (8-10) zum Transportieren der Werkstückträger (4) von einer der Auflageflächen zu einem vorgegebenen Übergabeort auf einer horizontalen Auflage der Bearbeitungsmaschine und zurück,
wobei das Handhabungsgerät einen passiven Greifer (6) aufweist,
wobei an jedem Werkstückträger (4) seitlich eine an den passiven Greifer (6) angepasste Greiferaufnahme (13) derart angeordnet ist, dass sich die Greiferaufnahme (13) horizontal versetzt neben einer durch den Schwerpunkt des Werkstückträgers (4) hindurchgehenden Senkrechten befindet,
wobei die Greiferaufnahme (13) wenigstens eine Ausnehmung (22) aufweist, in die wenigstens ein Vorsprung (20) des Greifers (6) formschlüssig eingreifen kann,
wobei die wenigstens eine Ausnehmung (22) der Greiferaufnahme (13) und der wenigstens eine Vorsprung (20) des Greifers (6) derart ausgebildet sind, dass einerseits beim Eingreifen des Greifers (6) ein Kippen des Werkstückträgers (4) verhindert wird und andererseits gewährleistet wird, dass der Greifer (6) beim Ablegen des Werkstückträgers (4) auf der horizontalen Auflage ohne störende Einwirkung auf den Werkstückträger ungehindert aus der Greiferaufnahme (12) herausgezogen werden kann,
wobei die Greiferaufnahme (13) wenigstens eine nach unten offene Ausnehmung (22) aufweist, in die wenigstens ein nach oben gerichteter Vorsprung (20) des Greifers eingreifen kann, indem der wenigstens eine Vorsprung horizontal unter die wenigstens eine Ausnehmung bewegt und dann vertikal nach oben in die wenigstens eine Ausnehmung eingefahren wird, wobei die wenigstens eine Ausnehmung und der wenigstens eine Vorsprung derart ausgebildet sind, dass einerseits beim Einfahren und Anheben des Greifers ein Kippen des Werkstückträgers verhindert wird und andererseits gewährleistet wird, dass der Greifer beim Ablegen des Werkstückträgers auf einer horizontalen Ablage nach unten ungehindert aus der Greiferaufnahme herausgezogen werden kann,
wobei die Greiferaufnahme (13) in einer ersten Richtung versetzt neben der durch den Schwerpunkt des Werkstückträgers (4) hindurchgehenden Senkrechten angeordnet ist und
dass die Greiferaufnahme (13) und der Greifer (6) derart ausgebildet sind, dass beim Einfahren des wenigstens einen Vorsprungs (20) des Greifers (6) in die wenigstens eine Ausnehmung (22) der Greiferaufnahme (13) wenigstens eine erste Anlagefläche (17) des Greifers an wenigstens einer ersten Anlagefläche (19) der Greiferaufnahme entlanggleitet, bis wenigstens eine zweite Anlagefläche (23) des Greifers an wenigstens einer zweiten Anlagefläche (24) der Greiferaufnahme zur Anlage kommt, wobei die wenigstens eine erste (19) und die wenigstens eine zweite (24) Anlagefläche der Greiferaufnahme (13) quer zur ersten Richtung orientiert, in der ersten Richtung beabstandet und in der vertikalen Richtung versetzt angeordnet sind, wobei zwischen der wenigstens einen ersten (19) und der wenigstens einen zweiten (24) Anlagefläche der Greiferaufnahme (13) ein sich nach unten öffnender spitzer Winkel zwischen 5° und 45°, vorzugsweise zwischen 10° und 20°, gebildet ist.

2. Kompakter Werkstückwechsler nach Anspruch 1, **dadurch gekennzeichnet, dass** sowohl das Trägerkarussell als auch das Handhabungsgerät ausschließlich elektromotorisch angetrieben sind.

3. Kompakter Werkstückwechsler nach Anspruch 1 oder 2, **dadurch gekennzeichnet, dass** die erste Anlagefläche (17) des Greifers (6) und die erste Anlagefläche (19) der Greiferaufnahme (13) eben sind.

4. Kompakter Werkstückwechsler nach Anspruch 1, 2 oder 3, **dadurch gekennzeichnet,**
**dass** die wenigstens eine zweite Anlagefläche der Greiferaufnahme (13) eine näherungsweise senkrechte Innenfläche (24) der wenigstens einen Ausnehmung (22) ist, deren Oberfläche dem Werkstückträger (4) zugewandt ist, und
**dass** die wenigstens eine erste Anlagefläche (19) der Greiferaufnahme (13) in der horizontalen ersten Richtung zwischen der wenigstens einen zweiten Anlagefläche (24) und der durch den Schwerpunkt führenden Senkrechten und in vertikaler Richtung unterhalb der wenigstens einen zweiten Anlagefläche angeordnet ist und die Oberfläche der ersten Anlagefläche (19) der zweiten Anlagefläche (24) zugewandt ist.

5. Kompakter Werkstückwechsler nach Anspruch 4, **dadurch gekennzeichnet, dass** die Greiferaufnahme (13) eine nach unten offene Ausnehmung aufweist, wobei die Ausnehmung eine sich quer zur ersten Richtung erstreckende Nut ist, wobei die wenigstens eine zweite Anlagefläche von zumindest einer Teiloberfläche der dem Werkstückträger zugewandten Innenfläche der Nut gebildet wird.

6. Kompakter Werkstückwechsler nach Anspruch 4, **dadurch gekennzeichnet, dass** die Ausnehmungen der Greiferaufnahme (13) Bohrungen (22) sind, in die jeweils ein Zapfen (20) des Greifers (6) eingreifen kann, wobei jeweils eine zweite Anlagefläche von einer Teiloberfläche der Innenfläche einer Bohrung gebildet wird.

7. Kompakter Werkstückwechsler nach Anspruch 6, **dadurch gekennzeichnet, dass** die Zapfen (20) des Greifers (6) einen Außendurchmesser haben, der geringer als der Innendurchmesser der Bohrung (22) ist, so dass jeweils eine zweite Anlagefläche von einer schmalen, streifenförmigen, sich senkrecht erstreckenden Teiloberfläche (24) der Innenfläche einer Bohrung (22) gebildet wird.

8. Kompakter Werkstückwechsler nach Anspruch 6 oder 7, **dadurch gekennzeichnet, dass** zwei Bohrungen (22) und zwei Zapfen (20) vorgesehen sind, die etwa gleich von den ersten Anlageflächen (17, 19) beabstandet sind.

9. Kompakter Werkstückwechsler nach einem der Ansprüche 6 bis 8, **dadurch gekennzeichnet, dass** die unteren Ränder der Bohrungen (22) konisch erweitert und/oder die oberen Enden der Zapfen (20) konisch verjüngt sind, um das Einfahren zu erleichtern.

10. Kompakter Werkstückwechsler nach einem der Ansprüche 1 bis 9, **dadurch gekennzeichnet, dass** das Handhabungsgerät einen Linearachsrobotor mit einer Linearführung (9) umfasst, wobei der Greifer (6) an einer auf der Linearführung (9) geführten Vorrichtung (8) zum vertikalen Bewegen des passiven Greifers (6) befestigt ist.

11. Kompakter Werkstückwechsler nach einem der Ansprüche 1 bis 10, **dadurch gekennzeichnet, dass** das Trägerkarussell einen Drehteller (1) mit mehreren am Umfang verteilt angeordneten Auflageflächen (3) umfasst.

12. Kompakter Werkstückwechsler nach einem der Ansprüche 1 bis 11, **dadurch gekennzeichnet, dass** der Werkstückträger (4) einen Zentrierspanner (12) und eine Trägerplatte (11) mit Greiferaufnahme (13) umfasst.

13. Kompakter Werkstückwechsler nach einem der Ansprüche 1 bis 12, **dadurch gekennzeichnet, dass** die horizontale Auflage ein Maschinentisch mit einem Nullpunktspannsystem ist.

## Claims

1. A compact workpiece changer for a processing machine with:
a rotating carrier carousel (1) with a plurality of horizontal support surfaces (3) that can respectively accommodate one workpiece carrier (4),
a handling device (8-10) for transporting the workpiece carriers (4) from one of the support surfaces to a predetermined transfer point on a horizontal support of the processing machine and back,
wherein the handling device features a passive gripper (6),
wherein a gripper receptacle (13) that is adapted to the passive gripper (6) is laterally arranged on each workpiece carrier (4) in such a way that the gripper receptacle (13) is situated horizontally offset and adjacent to a vertical line extending through the center of gravity of the workpiece carrier (4),
wherein the gripper receptacle (13) features at least one recess (22), into which at least one projection (20) of the gripper (6) can engage in a form-fitting fashion,
wherein the at least one recess (22) of the gripper receptacle (13) and the at least one projection (20) of the gripper (6) are realized in such a way that tilting of the workpiece carrier (4) is prevented during the engagement of the gripper (6) and it is ensured that the gripper (6) can be pulled out of the gripper receptacle (12) in an unobstructed fashion without interferingly affecting the workpiece carrier when the workpiece carrier (4) is deposited on the horizontal support,
wherein the gripper receptacle (13) features at least one recess (22) that is open toward the bottom and into which at least one upwardly directed projection (20) of the gripper can be engaged by horizontally moving the at least one projection under the at least one recess and then vertically displacing the projection upward into the at least one recess, with the at least one recess and the at least one projection being realized in such a way that tilting of the workpiece carrier is prevented during the displacement and the upward movement of the gripper and it is ensured that the gripper can be downwardly pulled out of the gripper receptacle in an unobstructed fashion when the workpiece carrier is deposited on a horizontal support,
wherein the gripper receptacle (13) is arranged offset in a first direction and adjacent to the vertical line extending through the center of gravity of the workpiece carrier (4), and
wherein the gripper receptacle (13) and the gripper (6) are realized in such a way that at least a first contact face (17) of the gripper glides along at least one first contact face (19) of the gripper receptacle when the at least one projection (20) of the gripper (6) is displaced into the at least one recess (22) of the gripper receptacle (13), namely until at least one second contact face (23) of the gripper comes in contact with at least one second contact face (24) of the gripper receptacle, with the at least one first (19) and the at least one second (24) contact face of the gripper receptacle (13) be oriented transverse to the first direction, spaced apart in the first direction and arranged offset in the vertical direction, and with a downwardly opening acute angle between 5°and 45°, preferably between 10° and 20°, being formed between the at least one first (19) and the at least one second (24) contact face of the gripper receptacle (13).

2. The compact workpiece changer according to Claim 1, **characterized in that** the carrier carousel, as well as the handling device, are exclusively driven in an electromotive fashion.

3. The compact workpiece changer according to Claim 1 or 2, **characterized in that** the first contact face (17) of the gripper (6) and the first contact face (19) of the gripper receptacle (13) are plane.

4. The compact workpiece changer according to Claim 1, 2 or 3, **characterized in**
**that** the at least one second contact face of the gripper receptacle (13) is an approximately vertical inner face (24) of the at least one recess (22), the surface of which is directed toward the workpiece carrier (4), and in
**that** the at least one first contact face (19) of the gripper receptacle (13) is arranged between the at least one second contact face (24) and the vertical line extending through the center of gravity in the horizontal first direction and underneath the at least one second contact face in the vertical direction and the surface of the first contact face (19) is directed toward the second contact face (24).

5. The compact workpiece changer according to Claim 4, **characterized in that** the gripper receptacle (13) features a recess that is open toward the bottom, wherein the recess is a groove that extends transverse to the first direction, and wherein the at least one second contact face is formed by at least one partial surface of the inner face of the groove that is directed toward the workpiece carrier.

6. The compact workpiece changer according to Claim 4, **characterized in that** the recesses of the gripper receptacle (13) are bores (22), into which a pin (20) of the gripper (6) can respectively engage, wherein a second contact face is respectively formed by a partial surface of the inner face of a bore.

7. The compact workpiece changer according to Claim 6, **characterized in that** the pins (20) of the gripper (6) have an outside diameter that is smaller than the inside diameter of the bore (22) such that a second contact face is respectively formed by a narrow, strip-shipped and vertically extending partial surface (24) of the inner face of a bore (22).

8. The compact workpiece changer according to Claim 6 or 7, **characterized in that** two bores (22) and two pins (20) are provided and spaced apart from the first contact face (17, 19) by approximately identical distances.

9. The compact workpiece changer according to one of Claims 6 to 8, **characterized in that** the lower edges of the bores (22) are conically widened and/or the upper ends of the pins (20) are conically tapered in order to simplify the engagement.

10. The compact workpiece changer according to one of Claims 1 to 9, **characterized in that** the handling device comprises a linear axis robot with a linear guide (9), wherein the gripper (6) is fixed on a device (8) for vertically moving the passive gripper (6) that is guided on the linear guide (9).

11. The compact workpiece changer according to one of Claims 1 to 10, **characterized in that** the carrier carousel comprises a rotary plate (1) with several support surfaces (3) distributed on the circumference.

12. The compact workpiece changer according to one of Claims 1 to 11, **characterized in that** the workpiece carrier (4) comprises a centering tensioner (12) and a carrier plate (11) with gripper receptacle (13).

13. The compact workpiece changer according to one of Claims 1 to 12, **characterized in that** the horizontal support is a machine table with a zero point tensioning system.

## Revendications

1. Dispositif de changement d'outil compact pour une machine d'usinage comprenant un carrousel porteur (1) rotatif avec une pluralité de faces d'appui horizontales (3) qui peuvent recevoir chacune un support de pièces (4),
un appareil de manipulation (8 - 10) pour transporter le support de pièces (4) depuis l'une des faces d'appui vers un lieu de remise prédéfini sur une surface porteuse horizontale de la machine d'usinage et retour,
l'appareil de manipulation présentant un grappin passif (6),
un logement de grappin (13) adapté au grappin passif (6) étant placé latéralement sur chaque support de pièces (4) de telle manière que le logement de grappin (13) se trouve décalé horizontalement près d'une verticale traversant le centre de gravité du support de pièces (4),
le logement de grappin (13) présentant au moins un évidement (22) dans lequel au moins une saillie (20) du grappin (6) peut s'engager par complémentarité de forme, l'au moins un évidement (22) du logement de grappin (13) et l'au moins une saillie (20) du grappin (6) étant formés de manière à ce que d'une part une bascule du support de pièces (4) soit évitée lors de l'engagement du grappin (6) et d'autre part qu'il soit assuré que le grappin (6), lors de la pose du support de pièces (4) sur la surface porteuse horizontale, peut être tiré au-dehors du logement de grappin (13) sans conséquence fâcheuse sur le support de pièces,
le logement de grappin (13) présentant au moins un évidement (22) ouvert vers le bas dans lequel au moins une saillie (20) du grappin dirigée vers le haut peut s'engager, en ce que l'au moins une saillie est déplacée horizontalement sous l'au moins un évidement et est rentrée verticalement vers le haut dans l'au moins un évidement, l'au moins un évidement et l'au moins une saillie étant formés de manière à ce que d'une part une bascule du support de pièces soit évitée lors de l'engagement du grappin et d'autre part qu'il soit assuré que le grappin, lors de la pose du support de pièces sur une surface porteuse horizontale, peut être tiré vers le bas au-dehors du logement de grappin,
le logement de grappin (13) étant décalé dans une première direction près de la verticale traversant le centre de gravité du support de pièces (4) et
que le logement de grappin (13) et le grappin (6) sont ainsi formés que lors de l'entrée de l'au moins une saillie (20) du grappin (6) dans l'au moins un évidement (22) du logement de grappin (13), au moins une première face d'appui (17) du grappin soit dirigée le long d'au moins une première face d'appui (19) du logement de grappin, jusqu'à ce qu'au moins une deuxième face d'appui (23) du grappin vienne se poser sur au moins une deuxième face d'appui (24) du logement de grappin, l'au moins une première (19) et l'au moins une deuxième (24) faces d'appui du logement de grappin (13) étant orientées transversalement à la première direction, placées à distance dans la première direction et décalées dans la direction verticale, un angle aigu s'ouvrant vers le bas, compris entre 5° et 45°, de préférence entre 10° et 20° étant formé entre l'au moins une première (19) et l'au moins une deuxième (24) faces d'appui.

2. Dispositif de changement d'outil compact selon la revendication 1, **caractérisé en ce que** tant le carrousel porteur que l'appareil de manipulation ont un entraînement exclusivement par électromoteur.

3. Dispositif de changement d'outil compact selon la revendication 1 ou 2, **caractérisé en ce que** la première face d'appui (17) du grappin (6) et la première face d'appui (19) du logement de grappin (13) sont planes.

4. Dispositif de changement d'outil compact selon la revendication 1, 2 ou 3, **caractérisé en ce que** l'au moins une deuxième face d'appui du logement de grappin (13) est une face intérieure (24) presque verticale de l'au moins un évidement (22) dont la surface est tournée contre le support de pièces (4) et que l'au moins une première face d'appui (19) du logement de grappin (13) est placée dans la première direction horizontale entre l'au moins une deuxième face d'appui (24) et la verticale traversant le centre de gravité et en direction verticale au-dessous de l'au moins une deuxième face d'appui et la surface de la première face d'appui (19) est tournée contre la deuxième face d'appui (24).

5. Dispositif de changement d'outil compact selon la revendication 4, **caractérisé en ce que** le logement de grappin (13) présente un évidement ouvert vers le bas, l'évidement étant une fente s'étendant transversalement à la première direction, l'au moins une deuxième face d'appui étant formée par au moins une surface partielle de la face intérieure de la fente tournée vers le support de pièces.

6. Dispositif de changement d'outil compact selon la revendication 4, **caractérisé en ce que** les évidements du logement de grappin (13) sont des perçages (22) dans lesquels un tenon (20) respectif du grappin (6) peut s'engager, une deuxième face d'appui étant respectivement formée par une surface partielle de la face intérieure d'un perçage.

7. Dispositif de changement d'outil compact selon la revendication 6, **caractérisé en ce que** les tenons (20) du grappin (6) ont un diamètre extérieur inférieur au diamètre intérieur du perçage (22), de façon à ce que respectivement une deuxième face d'appui soit formée par une surface partielle (24) étroite, en forme de bande, s'étendant verticalement, de la face intérieure d'un perçage (22).

8. Dispositif de changement d'outil compact selon la revendication 6 ou 7, **caractérisé en ce que** deux perçages (20) et deux tenons (20) sont prévus, lesquels sont à environ la même distance des premières faces d'appui (17, 19).

9. Dispositif de changement d'outil compact selon l'une des revendications 6 à 8, **caractérisé en ce que** les bords inférieurs des perçages (22) sont élargis de manière conique et/ou les extrémités supérieures des tenons (20) sont rétrécies de manière conique pour faciliter l'engagement.

10. Dispositif de changement d'outil compact selon l'une des revendications 1 à 9, **caractérisé en ce que** l'appareil de manipulation comprend un robot à axe linéaire avec un guide linéaire (9), le grappin (6) étant fixé sur un dispositif (8) guidé sur le guide linéaire (9) pour faire bouger le grappin passif (6) verticalement.

11. Dispositif de changement d'outil compact selon l'une des revendications 1 à 10, **caractérisé en ce que** le carrousel porteur comprend un plateau tournant (1) avec plusieurs faces d'appui (3) réparties sur son périmètre.

12. Dispositif de changement d'outil compact selon l'une des revendications 1 à 11, **caractérisé en ce que** le support de pièces (4) comprend un tendeur de centrage (12) et un plateau porteur (11) avec logement de grappin (13).

13. Dispositif de changement d'outil compact selon l'une des revendications 1 à 12, **caractérisé en ce que** la face d'appui horizontale est une table de machine avec un système de bridage point zéro.
